# EUROPÄISCHE PATENTANMELDUNG

(11) **EP 0 774 320 A1**
(43) Veröffentlichungstag der Anmeldung: **21.05.1997**
(21) Anmeldenummer: 96115442.4
(22) Anmeldetag: 26.09.1996
(51) Int. Cl.: B23K 37/04

(54) **Verfahren zum Positionieren und Ausrichten von Werkstücken**

(30) Priorität: 20.11.1995 CH 3272/95
(71) Anmelder: ELPATRONIC AG, CH-6303 Zug (CH)
(72) Erfinder: Urech, Werner, 5466 Kaiserstuhl (CH); Luessi, Rainer Marcus, 8362 Itaslen (CH)

(57) **Zusammenfassung**

Bei einem Verfahren zum Positionieren und Ausrichten von Werkstücken (I - VI), insbesondere von einer oder mehreren zu verbindenden Metallplatinen an zumindest einem Anschlag (6, 9), soll zwischen dem Werkstück (I - VI) und dem Anschlag (6, 9) ein Positionssignal, bevorzugt ein elektrisches Signal übertragen und Werkstück und Anschlag als Signalleiter verwendet werden.

## Beschreibung

Die Erfindung betrifft ein Verfahren zum Positionieren und Ausrichten von Werkstücken, insbesondere von einer oder mehreren zu verbindenden Metallplatinen an zumindest einem Anschlag, sowie eine Vorrichtung hierfür.

In vielen Fällen der industriellen Fertigung sollen zwei flächige Werkstücke miteinander verbunden werden. Dies gilt beispielsweise für Werkstücke, die im Automobilbau Verwendung finden. Dabei handelt es sich meist um zwei oder mehrere flächige Metallplatinen, die jedoch auch in bestimmtem Umfang eine Kontur aufweisen können, die vom Rechteck abweicht. Diese Metallplatinen sollen miteinander beispielsweise durch ein Quetschnahtschweissen, Laserschweissen od. dgl. verbunden werden. Für die vorliegende Erfindung ist es gleichgültig, welche Verbindungsart gewählt wird.

Bei all diesen Werkstücken, die miteinander verbunden werden sollen, ist es wichtig, dass sie exakt aufeinander ausgerichtet sind. Sollen sie beispielsweise durch ein Quetschnahtschweissen miteinander verbunden werden, so überlappen sie sich in Randbereichen. Der Grad der Überlappung muss jedoch sehr exakt gewählt werden. Sollen die beiden Werkstücke beispielsweise durch Laserschweissen miteinander verbunden werden, so darf der Spalt zwischen den beiden Randkanten der stumpf aneinander stossenden Werkstücke eine bestimmte Breite, beispielsweise 0,08 mm, nicht überschreiten. Deshalb ist es ausserordentlich wichtig, dass die Werkstücke, bevor sie der Verbindungseinrichtung zugeführt werden, zueinander positioniert und ausgerichtet werden. Dies gilt natürlich nicht nur, wenn zwei Werkstücke miteinander verbunden werden, sondern auch dann, wenn ein Werkstück beispielsweise mit zwei, drei oder mehreren Werkstücken verbunden werden soll.

Heute geschieht diese Positionierung von Hand oder automatisch, wobei die miteinander zu verbindenden Werkstücke an vorgesehene Anschläge angelegt werden. Diese Anschläge befinden sich in der Maschine zwischen den Klemmvorrichtungen für die beiden Bleche oder auf Zuführtischen, die die Bleche der Klemmvorrichtung zuführen. Beiden Versionen ist gemeinsam, dass wegen der engen Platzverhältnisse in der Maschine nicht überwacht werden kann, ob die Werkstücke vor deren Klemmung auch wirklich an den Anschlägen liegen und somit lagegerecht eingespannt werden.

Der vorliegenden Erfindung liegt die Aufgabe zugrunde, die Positionierung von Werkstücken wesentlich genauer auszugestalten.

Zur Lösung dieser Aufgabe führt ein Verfahren der o.g. Art, dass zwischen dem Werkstück (I-VI) und dem Anschlag (, 9) ein Positionssignal zu übertragen ist und Werkstück und Anschlag als Signalleiter verwendet werden.

Als Signal, welches zwischen Werkstück und Anschlag übertragen wird, kann jedes beliebige Signal Anwendung finden. Beispielsweise zählt hierzu Ultraschall oder magnetische Wellen, insbesondere aber der elektrische Strom, der zwischen Anschlag und Werkstück fließen kann.

Das zu positionierende Werkstück wird beispielsweise durch angetriebene Rollen oder eine andere Zuführeinrichtung, z.B. einen Roboter, auf den Anschlag zubewegt, an dem das Werkstück positioniert werden soll. Findet ein Signalfluss zwischen dem Werkstück und dem Anschlag statt, so wird bestätigt, dass das Werkstück sich auch tatsächlich am Anschlag bzw. in direktem Kontakt mit dem Anschlag befindet. Findet kein Signalfluss statt, so ist das Werkstück gegenüber dem Anschlag noch nicht positioniert und muss erneut ausgerichtet werden.

Ein Signal kann von dem Werkstück zu dem Anschlag oder umgekehrt von dem Anschlag zu dem Werkstück fliessen und dort abgegriffen werden. Da jedoch bevorzugt mehrere Anschläge für ein Werkstück vorgesehen sind, dürfte es sich als ratsam erweisen, wenn das Werkstück mit der Signalquelle verbunden wird. Findet dann eine Verbindung der einzelnen Anschläge mit einem entsprechenden Strommessgerät statt, so kann auf einfache Art und Weise ermittelt werden, ob jeder Anschlag mit der Signalquelle in Verbindung steht, d.h., ob das Werkstück auch tatsächlich an jedem Anschlag, wie gewünscht, anliegt. Fehlt die Rückmeldung von einem Anschlag, so bedeutet dies, dass das Werkstück nicht ordnungsgemäss positioniert ist und nochmals ausgerichtet werden muss.

In der Regel handelt es sich um rechteckförmige Werkstücke oder Formzuschnitt mit mindestens einer geraden Randkante, nämlich der Schweisskante, welche quer und längs zu einer Transportrichtung positioniert werden sollen. Da sie später beispielsweise durch Quetschnaht- oder Laserschweissen miteinander verbunden werden, ist vor allem ihre gegenseitige Ausrichtung, d.h., die Ausrichtung ihrer miteinander zu verbindenden Randkanten wichtig. Deshalb werden für diese Randkanten bevorzugt zwei Anschläge vorgesehen, die räumlich getrennt voneinander angeordnet sind. Meist befindet sich ein Anschlag nahe dem vorderen und ein Anschlag nahe dem in Transportrichtung hinteren Ende des Werkstückes.

Bei den heute üblichen Vorrichtungen zum Verbinden von zwei Werkstücken werden meist nicht nur zwei Werkstücke positioniert und der Verbindungseinrichtung zugeführt, sondern eine Mehrzahl von Werkstücken wird paarweise oder jeweils nach der gewünschten Anzahl aufeinander ausgerichtet, geklemmt und der Verbindungseinrichtung zugeführt. Dabei ist es wichtig, dass alle Werkstücke, die miteinander verbunden werden sollen, auch entsprechend ausgerichtet sind. Das bedeutet, dass in einer derartigen Vorrichtung eine Vielzahl von Anschlägen überwacht werden muss. Hinzu kommt, dass auch die Überwachung eines vorderen und eines hinteren Anschlags jeweils pro Werkstück durchgeführt werden soll. Für eine derartige Überwachung ist es einmal möglich, dass jeder Anschlag mit einem entsprechenden Empfangsgerät verbunden wird, so dass für jeden Anschlag erkannt werden kann, ob er mit dem Werkstück in Kontakt steht oder nicht. Dabei müssen aber viele Verbindungsleitungen zwischen den Anschlägen und einem Empfänger verlegt werden.

Um dieses Verfahren der Überwachung einer Mehrzahl von Anschlägen zu vereinfachen, ist es beispielsweise denkbar, Anschläge, die zu verschiedenen Werkstücken gehören, in einer zeitlichen Reihenfolge abzufragen. Dabei genügt es, wenn Werkstücke aufeinander folgend mit einer Spannungsquelle verbunden werden, ihre Anschläge jedoch über eine gemeinsame Verbindungsleitung mit dem Empfänger in Verbindung stehen.

Denkbar ist auch, dass unterschiedliche Werkstücke mit einer unterschiedlichen Spannung, Frequenz oder Stromstärke oder aber auch mit unterschiedlich langen Stromimpulsen beaufschlagt werden. Es muss lediglich gewährleistet sein, dass der Empfänger die unterschiedlichen Signale erkennen und anzeigen kann. Hierdurch werden viele Verbindungsleitungen eingespart, da immer eine Reihe von Anschlägen auf eine Verbindungsleitung geschaltet werden kann. Beispielsweise ist es auch denkbar, die Anzahl von Stromstössen für aufeinander folgende Werkstücke zu variieren.

Ferner besteht die Möglichkeit, Stromflussrichtungen beispielsweise durch Dioden einzuschränken. Hierdurch kann ein Werkstück mit zwei Anschlägen zusammenwirken, die beide einem Stromleiter zugeordnet sind. Bei einem Anschlag verhindert die Diode einen Stromfluss von dem Leiter zu dem Werkstück, erlaubt jedoch einen Stromfluss von dem Werkstück zum Leiter. Die andere Diode ist anders herum geschaltet.

Zur Positionierung einer Mehrzahl von Werkstücken in einer Vorrichtung zum Verbinden dieser Werkstücke, beispielsweise in einer Quetschnahtschweisseinrichtung oder Laserschweisseinrichtung, sollen bevorzugt die Anschläge an drehbaren Anschlagwellen angeordnet sein, so dass sie zum Positionieren der Werkstücke durch Drehen der Anschlagwellen eingeschwenkt werden können. Dabei ist eine drehbaren Anschlagwelle für die linksseitig ankommenden Werkstücke und eine Anschlagwelle für die rechtsseitig ankommenden Werkstücke vorgesehen, so dass diese Anschlagwellen bevorzugt übereinander liegen. In diesen Anschlagwellen können die entsprechenden Verbindungsleitungen für die Anschläge geführt werden. Die Anschlagwellen selbst können aber auch als Leiter ausgebildet sein, wobei hier viele Möglichkeiten denkbar sind und von der vorliegenden Erfindung umfasst sein sollen.

Durch ein Drehen der Anschlagwellen werden die Anschläge in die Querführung der Werkstücke eingeschwenkt, so dass diese Werkstücke an den Anschlägen anliegen. Sollen sich die Werkstücke, wie z. B. für das Quetschnahtschweissen, überlappen, so müssen zur elektrischen Anschlagüberwachung diese Werkstücke voneinander getrennt sein. Dies kann beispielsweise dadurch erfolgen, dass die Werkstücke in unterschiedlicher Höhe aufeinander ausgerichtet werden und erst beim endgültigen Klemmen aufeinander gelegt werden. Denkbar ist auch, dass erst das untere Werkstück positioniert, die Position bestimmt, dieses Werkstück geklemmt und dann das obere Werkstück mit seinen Anschlägen in Berührung gebracht und mit Strom beaufschlagt wird.

In anderen Fällen wird es sich als ratsam erweisen, die Anschläge selbst zum Teil zu isolieren, damit ein unerwünschter Stromfluss zwischen unterschiedlichen Werkstücken vermieden wird.

Hervorzuheben ist bei der vorliegenden Erfindung der minimale Aufwand für Schaltelemente, Verkabelung und die schnelle Abfragemöglichkeit auch an unzugänglichen Stellen. Das erfindungsgemässe Verfahren und die erfindungsgemässe Vorrichtung können überall dort angewendet werden, wo mehrere Bleche gleichzeitig positioniert und überwacht werden müssen. Das Verfahren bietet sich zwar insbesondere für die Verbindungstechnik von zwei Blechen an, soll jedoch darauf nicht beschränkt sein.

Während bislang die Werkstücke in einer Vorpositionierstation vorpositioniert und von einem Roboter in die eigentliche Einrichtung zum Verbinden der Werkstücke gebracht werden, kann nach der vorliegenden Erfindung die Vorpositionierung im wesentlichen entfallen oder sehr einfach ausgestaltet werden. Es genügt beispielsweise, wenn die Werkstücke auf einer schiefen Ebene an Zentrierbolzen anstehen, da die eigentliche Positionierung und Ausrichtung dann in der Maschine selbst durchgeführt und kontrolliert wird. Dies geschieht auch dann, wenn ein Roboter zur Zuführung der Werkstücke verwendet wird. Entfällt die Vorpositionierstation, dann wird der benötigte Platz erheblich reduziert und die gesamte Beladung der Maschine vereinfacht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch angedeutete Seitenansicht eines Teils einer Vorrichtung zum Verbinden von zwei flächigen Werkstücken;
Figur 2 eine Draufsicht auf den Teil der Vorrichtung zum Verbinden von zwei flächigen Werkstücken, wie er in Figur 1 dargestellt ist;
Figur 3 eine schematische Draufsicht auf eine erfindungsgemässe Anschlagüberwachung für die flächigen Werkstücke;
Figur 4 eine diagrammartige Darstellung von Impulssignalen eines Senders zum Prüfen des Anschlags der flächigen Werkstücke;
Figur 5 eine diagrammartige Darstellung von durch einen Empfänger festgestellten Signalen von einem Sender gemäss Figur 4;
Figur 6 eine diagrammartige Darstellung eines weiteren Ausführungsbeispieles von empfangenen Signalen zum Ermitteln des Anschlags von flächigen Werkstücken;
Figur 7 einen Querschnitt durch einen Teil der Vorrichtung gemäss Figur 1 entlang Linie VII - VII;

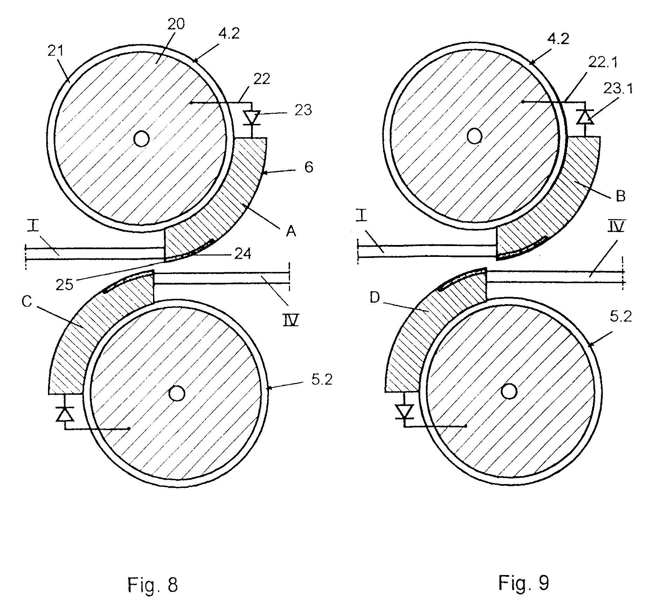

Figur 8 einen Querschnitt durch ein weiteres Ausführungsbeispiel einer Anschlagüberwachung ähnlich Figur 7 am Anfang eines Werkstückes;
Figur 9 einen Querschnitt durch das Ausführungsbeispiel einer Anschlagüberwachung gemäss Figur 8 am Ende des Werkstückes;
Figur 10 eine schematisch dargestellte Seitenansicht des Teils der Vorrichtung gemäss Figur 1 mit Klemm- und Transportelementen;
Figur 11 eine Draufsicht auf die Vorrichtungsteile gemäss Figur 10;
Figur 12 eine schematisch dargestellte Frontansicht eines Teils eines weiteren Ausführungsbeispiels einer Vorrichtung zum Verbinden von zwei flächigen Werkstücken;
Figur 13 eine Draufsicht auf die Vorrichtungsteile gemäss Figur 12.

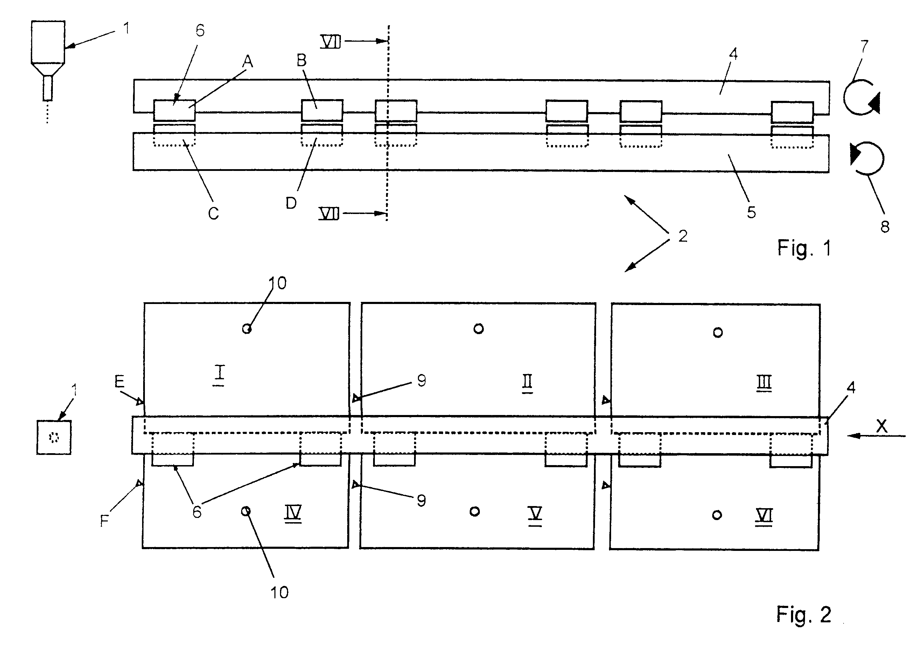

In den Figuren 1 und 2 ist ein Teil einer Vorrichtung zum Verbinden von flächigen Werkstücken I - VI angedeutet. Diese Werkstücke I - VI sollen paarweise miteinander verbunden werden, wobei Randkanten stumpf aneinanderstossen können und beispielsweise über einen Laserstrahl miteinander verbunden werden. Die Werkstücke I - VI können sich jedoch auch in einem Randkantenbereich überlappen und durch Quetschnahtschweissen miteinander verbunden werden.

Möglich ist jedoch eine Verbindung auf beliebige Weise, wie Schweissen, Kleben, Krimpen u.s.w. Für das paarweise Verbinden der Werkstücke I - VI ist lediglich schematisch eine Verbindungseinrichtung 1 angedeutet.

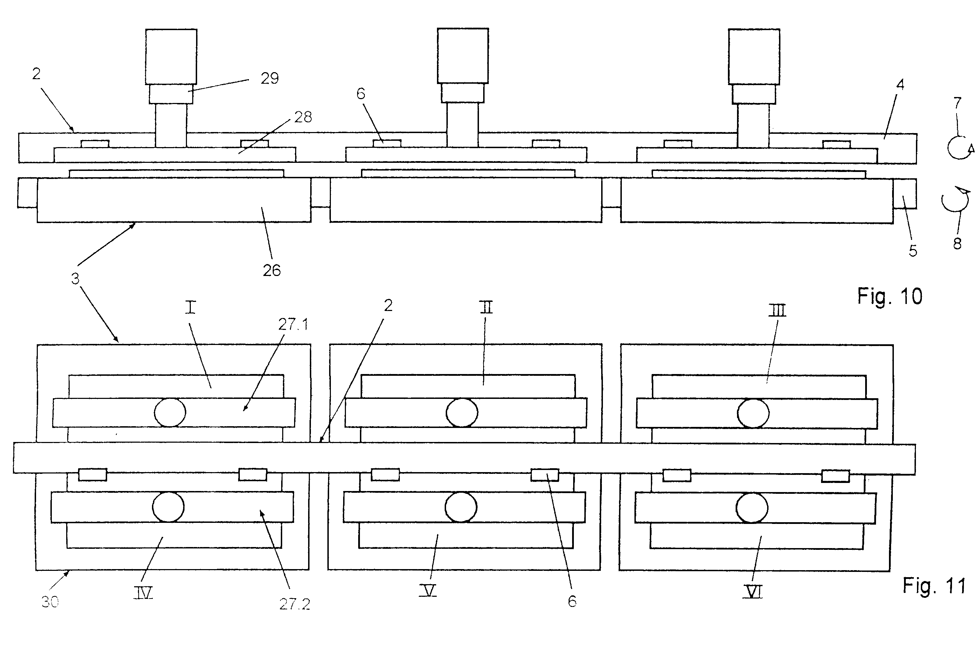

Der Verbindungseinrichtung 1 ist eine Anschlagüberwachungseinrichtung 2 und eine in den Figuren 10 und 11 angedeutete Transporteinrichtung 3 für die flächigen Werkstücke I - VI vorgeschaltet.

In Figur 1 sind an zwei Anschlagwellen 4 und 5 Anschläge 6 für die flächigen Werkstücke I - VI angeordnet. Sofern jeweils drei Paare von Werkstücken I - VI miteinander verbunden werden sollen, befinden sich somit an der oberen Drehwelle 4 sechs Anschläge 6, wobei jeweils ein Anschlag A nahe einem vorderen Bereich des flächigen Werkstückes I - III und ein Anschlag B nahe dem hinteren Bereich des flächigen Werkstückes I - III angeordnet ist. Desgleichen befinden sich auch an der unteren Anschlagwelle 5 sechs Anschläge, wobei jeweils ein Anschlag C dem vorderen Bereich des flächigen Werkstückes IV-VI und ein Anschlag D dem hinteren Bereich zugeordnet ist. Im vorliegenden Ausführungsbeispiel drehen beide Anschlagwellen 4 und 5 entgegen dem Uhrzeigersinn, was durch die Pfeile 7 und 8 angedeutet ist.

Bevorzugt soll nicht nur eine Anschlagüberwachung in Querrichtung sondern auch in Transportrichtung X für die flächigen Werkstücke I - VI durchgeführt werden. Hierfür sind entsprechende Anschläge 9 vorgesehen, wobei die rechtsseitigen Anschläge 9 mit E und die linksseitigen mit F gekennzeichnet sind.

Wesentliches Merkmal der vorliegenden Erfindung ist, dass zur Anschlagüberwachung die flächigen Werkstücke I - VI mit einer in Figur 2 nur schematisch angedeuteten Spannungsquelle 10 verbunden werden. - Dies setzt voraus, dass die flächigen Werkstücke I - VI aus einem stromleitenden Material bestehen, was insbesondere bei Metallplatinen der Fall ist. Die einzelnen Anschläge 6 und 9 werden dann der Reihe nach oder miteinander überprüft, ob ein Strom von der Spannungsquelle 10 zu den Anschlägen 6 bzw. 9 fliesst. Erst damit wird bestätigt, dass die flächigen Werkstücke I - VI tatsächlich an den Anschlägen 6 bzw. 9 anliegen.

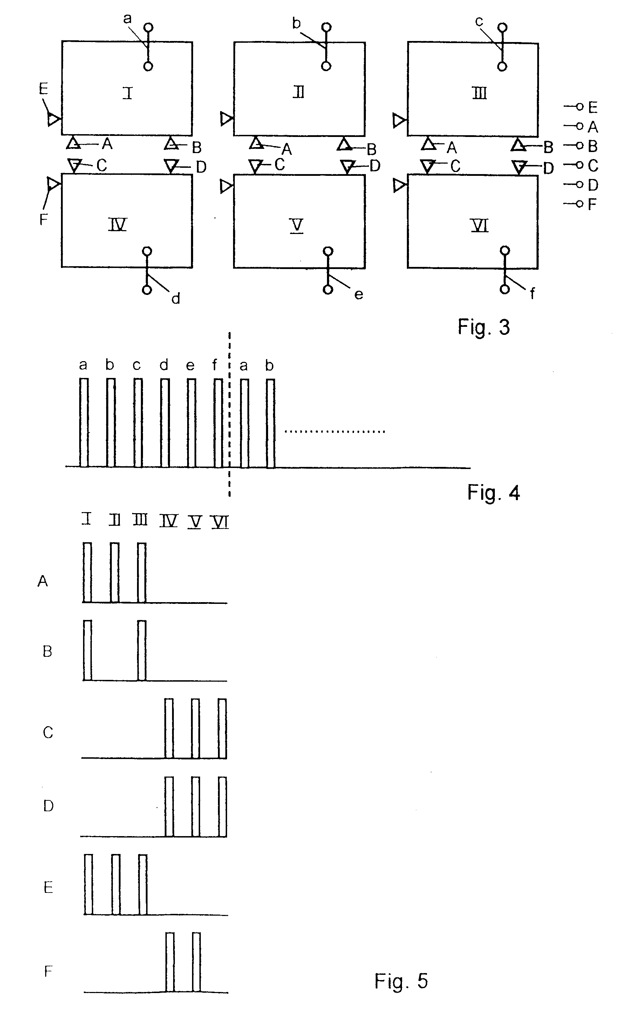

Möglich erscheint im übrigen auch, dass jeweils ein einem Werkstück I - VI zugeordneter Anschlag 6 bzw. 9 an eine Spannungsquelle angeschlossen ist, so dass damit ermittelt werden kann, ob die Werkstücke I - VI an allen Anschlägen 6 und 9 anliegen. Allerdings kann dabei nicht unterschieden werden, ob ein Werkstück I - VI beispielsweise nur an einem vorderen Anschlag A oder C oder nur an einem hinteren Anschlag B oder D anliegt. Deshalb wird bevorzugt jeder Anschlag 6 und 9, wie in Figur 3 angedeutet, abgegriffen und jedes Werkstück I - VI mit einer Spannungsquelle 10 verbunden. Dabei ist jedem Werkstück I - VI ein eigener Stromanschluss a - f zugeordnet, der ein Prüfsignal entsprechend Figur 4 abgibt. Mit einem geeigneten Empfänger werden diese Prüfsignale entsprechend Figur 5 aufgenommen und aufgezeichnet. Für jedes Werkstück I - VI muss der Empfänger drei Prüfsignale empfangen. Wird jeder Anschlag A - F gesondert abgegriffen, so kann genau ermittelt werden, welches Werkstück an welchem Anschlag nicht anliegt. Gemäss Figur 5 liegt z.B. das Werkstück II an seinem hinteren Anschlag B und das Werkstück VI an seinem Längsanschlag F nicht an.

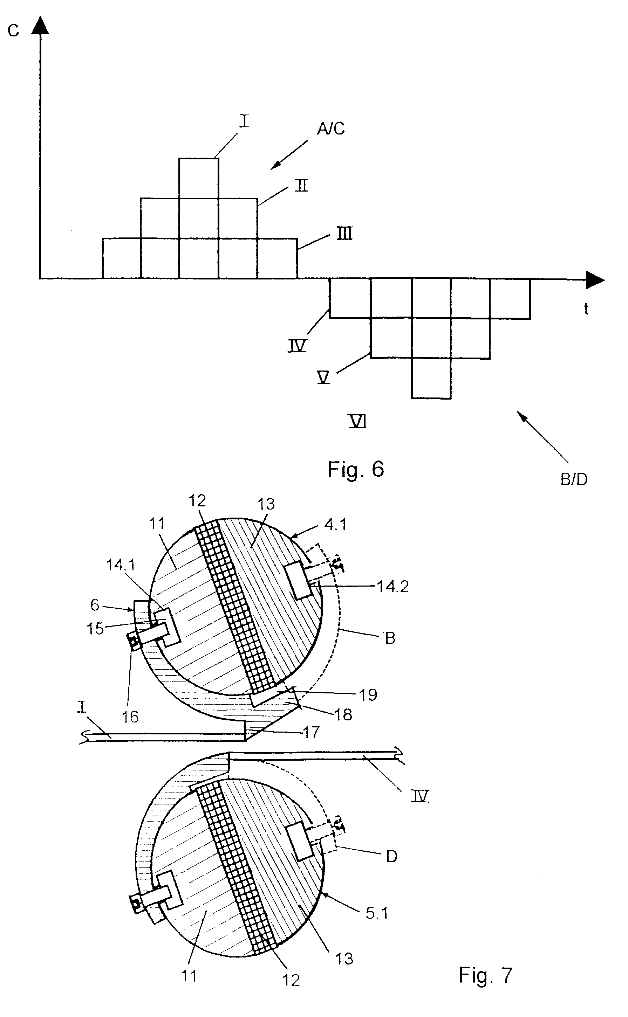

In einem anderen Ausführungsbeispiel sind alle vorderen Anschläge A bzw. C und alle hinteren Anschläge B bzw. D jeweils gemeinsam mit einem Empfänger verbunden. Jedem Werkstück I - VI wird eine unterschiedliche Impulsspannung C über eine unterschiedliche Impulslänge t aufgegeben. Dies ergibt, sofern alle Werkstücke I - VI den Anschlägen A bis D anliegen, das in Figur 6 gezeigte Bild. Liegt ein Werkstück nicht an, so fehlt sein entsprechendes Rechtecksignal für den entsprechenden Anschlag A bis D. Ähnliches kann auch mit Frequenzunterschieden bewirkt werden

Des weiteren ist es auch möglich, die einzelnen Werkstücke in einer zeitlichen Reihenfolge abzufragen. Dies könnte dann mit derselben Spannung und derselben Frequenz geschehen.

Sowohl bei der letztgenannten Möglichkeit, als auch bei dem gleichzeitigem Abfragen sämtlicher Anschläge 6 und 9 mit verschiedenen Spannungen bzw. Frequenzunterschieden über die Zeit ist es möglich, alle Anschläge 6 an jeweils einer Anschlagwelle 4.1 bzw. 5.1 gemäss Figur 7 zusammenzuschliessen. In diesem Fall bietet es sich an, zumindest einen Teil 11 der Welle 4.1 bzw. 5.1 durchgehend stromleitend auszubilden. Bevorzugt ist dieser leitende Teil 11 über eine Isolierschicht 12 mit einem zweiten im Längsschnitt etwa halbmondförmigen Teil 13 verbunden, der ebenfalls leitend ist. Auf diese Weise ist es möglich, Anschläge 6 nach beliebiger Richtung weisend mit der Drehwelle 4.1 bzw. 5.1 zu verbinden. Hierzu sind in das leitende Teil 11 bzw. das leitende Teil 13 der Anschlagwellen 4.1 bzw. 5.1 jeweils hinterschnittene Aufnahmen 14.1 bzw. 14.2 eingeformt, in welche entsprechende Nutensteine 15 zur Aufnahme von Schraubenbolzen 16 eingesetzt werden. Mit dem Schraubenbolzen 16 wird der Anschlag 6 an der Anschlagwelle 4.1 bzw. 5.1 festgelegt. Jeder Anschlag 6 weist eine eingeschnittene Anschlagkante 17 für ein Werkstück I bzw. IV auf. Ferner ist erkennbar, dass ein Kopfteil 18 des Anschlags 6 einen Spalt 19 zu der Anschlagwelle 4.1 bzw. 5.1 ausbildet, so dass der Anschlag 6 keinen Kurzschluss zu dem leitenden Teil 13 erzeugt.

Bevorzugt ist auch hier daran gedacht, die vorderen Anschläge A bzw. C von den hinteren Anschlägen B bzw. D zu trennen. In diesem Fall wird ein hinterer Anschlag B bzw. D, wie gestrichelt angedeutet, dem leitenden Teil 13 aufgesetzt und entsprechend dem Anschlag A bzw. C für den vorderen Teil der Werkstücke I - VI mit der Anschlagwelle 4.1 bzw. 5.1 verbunden.

Bei dem weiteren Ausführungsbeispiel von Anschlagwellen 4.2 und 5.2 ist jeweils ein Kern 20 aus leitendem Material vorgesehen, der von einer Isolationsschicht 21 umfangen ist. Der Kern 20 steht mit dem Anschlag 6 in elektrischer Verbindung, wobei in eine entsprechende Verbindung 22 eine Diode 23 eingeschaltet ist. Die Diode 23 lässt einen Stromfluss von dem Anschlag A am Anfang des Werkstückes I zu dem Anschlag B am Ende des Werkstückes zu. Dort ist in einer Verbindung 22.1 eine Diode 23.1 eingeschaltet, die allerdings in die entgegengesetzte Richtung geschaltet ist.

In der Regel liegen die Werkstücke I und IV bzw. die anderen Werkstückpaare II/V und III/VI sehr nahe beieinander, so dass die Gefahr besteht, dass Strom vom Anschlag bzw. Werkstück auf den anderen Anschlag bzw. auf das andere Werkstück übertragen wird. Diesem kann vorgebeugt werden, indem der Anschlag 6 einen Isolationsbereich 24 aufweist und gegebenenfalls zusätzlich mit einer Nase 25 das Werkstück I bzw. IV überragt, so dass keine Verbindung zwischen den beiden Werkstücken I und IV hergestellt werden kann.

In den Figuren 10 und 11 ist ferner noch die Möglichkeit einer Transporteinrichtung 3 gezeigt. Wesentlich ist, dass nach der Anschlagpositionierung der Werkstücke I - VI diese möglichst unverrückbar gehalten und der Verbindungseinrichtung 1 zugeführt werden. Hierzu kann beispielsweise ein Tisch 26 dienen, dem beidseits der Anschlagüberwachungseinrichtung 2 Klemmeinrichtungen 27.1 und 27.2 zugeordnet sind. Jede Klemmeinrichtung besteht bevorzugt aus einem Druckbalken 28 und einem Hydraulikstempel 29. Über die Klemmeinrichtungen 27.1 und 27.2 werden die Werkstücke I - VI auf den jeweiligen Tischen 26 festgelegt. Tisch 26 und Klemmeinrichtung 27 bilden zusammen einen Shuttle 30.

Sobald die Werkstücke I - VI an den entsprechenden Anschlägen 6 positioniert sind und festgestellt wurde, dass sämtliche Werkstücke I - VI den Anschlägen 6 anliegen, werden die Klemmeinrichtungen 27 in Gang gesetzt und die Werkstücke I - VI von den Klemmeinrichtungen 27 gegen die Tische 26 gedrückt. Nunmehr werden die Anschläge 6 durch Drehen der Anschlagwellen 4 und 5 in Richtung der Pfeile 7 und 8 weggeschwenkt, so dass die Werkstücke I - VI freigegeben sind. Jeder Shuttle 30 kann nun zu der Verbindungseinrichtung 1 hinbewegt werden, wobei die Werkstücke I - VI zwischen den Anschlagwellen 4 und 5 entlang geführt sind.

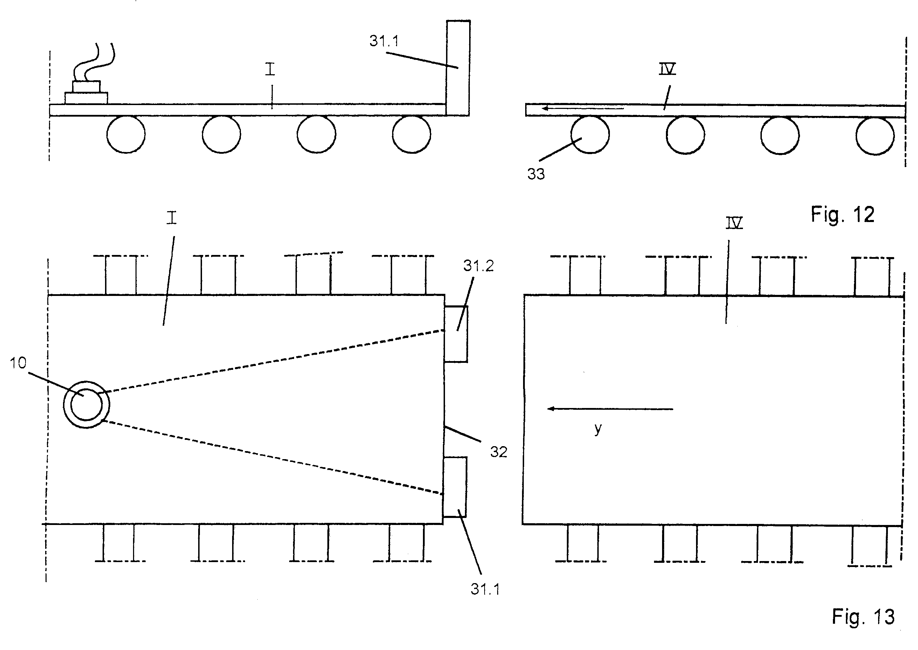

Während sich die bislang beschriebene Anschlagsüberwachungseinrichtung 2 vor allem für das überlappende Verbinden von zwei Werkstücken I - IV anbietet, ist in den Figuren 12 und 13 auch die Möglichkeit einer stumpfen Verbindung von zwei Werkstücken I und IV gezeigt. Hierbei erfolgt allerdings nur die genaue Anschlagpositionierung des Werkstückes I durch zwei Schwerter 31.1 und 31.2, welche, wie die Anschläge 6, einen Stromimpuls von der Spannungsquelle 10 empfangen und weiterleiten können. Hierdurch wird gewährleistet, dass eine Randkante 32 als Bezugskante positioniert und festgeklemmt werden kann.

Danach werden die Schwerter 31.1 und 31.2 weggenommen und das zu verbindende Werkstück IV in Richtung y gegen das Werkstück I bewegt.

Die Bewegung von Werkstück I und IV geschieht auf einer Rollenbahn 33.

## Patentansprüche

1. Verfahren zum Positionieren und Ausrichten von Werkstücken (I - VI), insbesondere von einer oder mehreren zu verbindenden Metallplatinen an zumindest einem Anschlag (6, 9),
dadurch gekennzeichnet,
das zwischen dem Werkstück (I-VI) und dem Anschlag (6, 9) ein Positionssignal zu übertragen ist und Werkstück (I-VI) und Anschlag (6, 9) als Signalleiter verwendet werden.

2. Verfahren nach Anspruch 1, dadurch gekennzeichnet, dass zwischen dem Werkstück (I-VI) und dem Anschlag (6, 9) bei deren gegenseitigem Kontakt das Vorhandensein eines Stromflusses ermittelt wird.

3. Verfahren nach Anspruch 2, dadurch gekennzeichnet, dass das Werkstück (I - VI) mit einer Spannungsquelle (10) verbunden wird.

4. Verfahren nach Anspruch 2, dadurch gekennzeichnet, dass der Anschlag (6, 9) mit einer Spannungsquelle (10) verbunden wird.

5. Verfahren nach einem der Ansprüche 1 - 4, dadurch gekennzeichnet, dass eine Randkante (32) eines Werkstückes (I - VI) mit zumindest zwei Anschlägen (6) in Berührung gebracht wird.

6. Verfahren nach Anspruch 5, dadurch gekennzeichnet, dass eine Randkante (32) eines Werkstückes (I - VI) mit zwei räumlich getrennt angeordneten Anschlägen (6, A/B, C/D)und eine weitere Randkante mit einem weiteren Anschlag (9, E/F) in Berührung gebracht wird.

7. Verfahren nach einem der Ansprüche 1 - 6, dadurch gekennzeichnet, dass aufeinanderfolgende Werkstücke (I - VI) unterschiedlich lange und/oder mit unterschiedlicher Spannung und/oder Frequenz und/oder Stromstärken und/oder Anzahl von Stromimpulsen beaufschlagt werden.

8. Vorrichtung zum Positionieren und Ausrichten von Werkstücken (I - VI), insbesondere von einer oder mehreren zu verbindenden Metallplatinen an zumindest einem Anschlag (6, 9) dadurch gekennzeichnet, dass dem Werkstück (I - VI) oder dem Anschlag (6, 9) eine Signalquelle zugeordnet ist.

9. Vorrichtung nach Anspruch 8, dadurch gekennzeichnet, dass eine Spannungsquelle (10) als Signalquelle dient.

10. Vorrichtung nach Anspruch 8 oder 9, dadurch gekennzeichnet, dass einer Randkante (32) des Werkstückes (I - VI) zumindest zwei Anschläge (A/B; C/D) zugeordnet sind.

11. Vorrichtung nach Anspruch 9 oder 10, dadurch gekennzeichnet, dass jeder Anschlag (6, 9) eine eigene Verbindung mit der Spannungsquelle (10) oder einem Empfänger aufweist.

12. Vorrichtung nach Anspruch 9 oder 10, dadurch gekennzeichnet, dass eine Reihe von Anschlägen (A, B, C, D, E, F) gemeinsam mit einem Empfänger verbunden ist.

13. Vorrichtung nach einem der Ansprüche 8 - 12, dadurch gekennzeichnet, dass Anschläge (6) für eine Randkante (32) an einer Anschlagwelle (4, 5) angeordnet sind und die Drehwelle (4, 5) einen signalleitenden (Teil (11, 13) oder Kern (20) aufweist.

14. Vorrichtung nach Anspruch 13, dadurch gekennzeichnet, dass ein Stromfluss zwischen einem leitenden Teil (11, 13) oder Kern (20) und dem Anschlag (6) über Bauelemente (23) richtungsabhängig geöffnet oder gesperrt ist.

15. Vorrichtung nach Anspruch 13 oder 14, dadurch gekennzeichnet, dass zwei Anschlagwellen (4, 5) mit Anschlägen (6) übereinander angeordnet und gleichsinnig drehbar sind.

16. Vorrichtung nach Anspruch 15, dadurch gekennzeichnet, dass den Anschlagwellen (4, 5) eine Halte- bzw. Klemmeinrichtung (27) für die Werkstücke (I - VI) und eine Transporteinrichtung (3) zugeordnet ist.
